# DEMANDE DE BREVET EUROPEEN

(11) **EP 3 839 737 A1**
(43) Date de publication de la demande: **23.06.2021**
(21) Numéro de dépôt: 20214168.5
(22) Date de dépôt: 15.12.2020
(51) Int. Cl.: G06F 9/50

(54) **PROCÉDÉ DE CONFIGURATION D'UN MODULE ÉLECTRONIQUE D'UN SYSTÈME AVIONIQUE**

(30) Priorité: 17.12.2019 FR 1914573
(71) Demandeur: THALES, 92400 Courbevoie (FR)
(72) Inventeur: MANGION, Christophe, 31036 Toulouse Cedex 1 (FR); FUMEY, Marc, 33700 Merignac (FR)
(74) Mandataire: Lavoix

(57) **Abrégé**

La présente invention concerne un procédé de configuration d'un module électronique (16) d'un système avionique (10), le procédé comprenant les étapes de :
a. obtention d'un ensemble de paramètres de configuration spécifiques au module (16), l'ensemble de paramètres de configuration comprenant :
i. un premier groupe de paramètres de configuration définissant un premier niveau de segmentation pour l'ensemble des ressources (14) du module (16), les segmentations du premier niveau étant appelées zones d'intégration,
ii. un deuxième groupe de paramètres de configuration pour chaque zone d'intégration définissant un deuxième niveau de segmentation pour les ressources (14) affectées à la zone d'intégration, les segmentations du deuxième niveau étant appelées partitions,

b. détermination d'une configuration de partitionnement des ressources (14) du module (16) en fonction des groupes de paramètres de configuration obtenus, et
c. exploitation du module (16) selon la configuration de partitionnement déterminée.

## Description

La présente invention concerne un procédé de configuration d'un module électronique d'un système avionique. L'invention concerne aussi un produit programme d'ordinateur associé. L'invention concerne également le module électronique.

Dans le domaine aéronautique, et plus précisément l'intégration IMA (abrégé de l'anglais « *Integrated Modular Avionics* », traduit en français par « *Avionique modulaire intégrée* »), il est connu d'intégrer différentes applications, potentiellement développées par des industriels différents, sur un même module via un intégrateur unique, aussi appelé « Module Integrator », agissant comme gestionnaire des ressources. L'intégrateur unique est principalement chargé de collecter les besoins en ressources des applications candidates, de distribuer les ressources aux différentes partitions recevant les applications et de contrôler le respect de contraintes relatives au partage des ressources physiques afin d'assurer le partitionnement permettant la qualification du module et des applications.

L'intégrateur est jusqu'à présent unique, car les modes communs du module sont susceptibles d'affecter toutes les applications. En outre, certaines contraintes ne peuvent être appliquées ou vérifiées que globalement sur le module, ce qui ne permet pas de dissocier le rôle de l'intégrateur en plusieurs acteurs indépendants. Cet aspect global est dû :
- à des contraintes croisées portant sur les ressources utilisées par les différentes applications,
- à des paramètres uniques relatifs au module et gérés par l'intégrateur,
- et à des vérifications du domaine d'usage transverses à tout le module, garantissant le partitionnement.

Ainsi, un tel processus d'intégration ne permet pas de faire cohabiter sur un même module des groupes d'applications devant être séparées pour des questions temporelles, industrielles ou confidentielles conduisant à définir des intégrateurs différents.

Il existe donc un besoin pour un procédé de configuration permettant d'intégrer des applications de manière indépendante.

A cet effet, la présente description a pour objet un procédé de configuration d'un module électronique d'un système avionique, le module ayant des ressources propres à être utilisées par des éléments consommateurs de ressources, le procédé étant mis en œuvre par le module électronique et comprenant les étapes de :
a. obtention d'un ensemble de paramètres de configuration spécifiques au module, l'ensemble de paramètres de configuration comprenant au moins les paramètres suivants :
   i. un premier groupe de paramètres de configuration définissant un premier niveau de segmentation pour l'ensemble des ressources du module, les segmentations du premier niveau étant appelées zones d'intégration, des ressources du module étant affectées à chaque zone d'intégration, chaque zone d'intégration étant associée à un ensemble d'éléments consommateurs de ressources différents des autres zones d'intégration,
   ii. un deuxième groupe de paramètres de configuration pour chaque zone d'intégration, chaque deuxième groupe de paramètres de configuration définissant un deuxième niveau de segmentation pour les ressources affectées à la zone d'intégration correspondante, les segmentations du deuxième niveau étant appelées partitions, un sous-ensemble de ressources parmi les ressources préalablement associées à la zone d'intégration correspondante étant affecté à chaque partition, chaque partition étant associée à un ensemble d'éléments consommateurs parmi les éléments consommateurs préalablement associés à la zone d'intégration correspondante, les ressources affectées à la partition étant allouées aux éléments consommateurs associés à la partition ,
b. détermination d'une configuration de partitionnement des ressources du module en fonction des groupes de paramètres de configuration obtenus, et
c. exploitation du module selon la configuration de partitionnement déterminée.

Suivant des modes de mise en œuvre particuliers, le procédé comprend une ou plusieurs des caractéristiques suivantes, prises isolément ou suivant toutes les combinaisons techniquement possibles :
- chaque élément consommateur de ressources a un besoin en ressources, le premier groupe de paramètres de configuration étant déterminé par une unique entité sur la base de l'ensemble des ressources du module et des besoins en ressources de l'ensemble des éléments consommateurs de ressources ;
- chaque élément consommateur de ressources a un besoin en ressources, le deuxième groupe de paramètres de configuration de chaque zone d'intégration étant déterminé par une entité spécifique à la zone d'intégration sur la base seulement des ressources affectées à la zone d'intégration correspondante et des besoins en ressources des éléments consommateurs associés à ladite zone d'intégration ;
- l'ensemble des paramètres de configuration comprend, en outre, un troisième groupe de paramètres de configuration pour chaque partition, chaque troisième groupe de paramètres de configuration définissant l'usage de chaque ressource allouée par le ou les éléments consommateurs associés à la partition ;
- chaque ressource du module a une capacité, au moins une ressource du module ayant une capacité modulable, l'ensemble des paramètres de configuration comprenant en outre :
   a. un quatrième groupe de paramètres de configuration définissant une première configuration de la ou d'au moins une ressource ayant une capacité modulable, et/ou
   b. un cinquième groupe de paramètres de configuration pour chaque zone d'intégration, chaque cinquième groupe de paramètres de configuration définissant une deuxième configuration de la ou d'au moins une ressource ayant une capacité modulable affectée au préalable à la zone d'intégration ;
- le procédé comprend une étape de modification de la configuration de partitionnement déterminée pour la prise en compte d'éléments consommateurs de ressources additionnels, l'étape de modification comprenant :
   a. l'obtention d'un premier groupe de paramètres de configuration additionnel définissant une ou des zones d'intégration additionnelles, des ressources du module étant affectées à ou aux zones d'intégration additionnelles, chaque zone d'intégration additionnelle étant associée à un ensemble d'éléments consommateurs de ressources additionnel différents des autres zones d'intégration,
   b. l'obtention d'un deuxième groupe de paramètres de configuration additionnel pour chaque zone d'intégration additionnelle, chaque deuxième groupe de paramètres de configuration additionnel définissant des partitions pour les ressources affectées à la zone d'intégration additionnelle, un sous-ensemble de ressources parmi les ressources préalablement affectées à la zone d'intégration additionnelle correspondante étant affecté à chaque partition, chaque partition étant associée à un ensemble d'éléments consommateurs parmi les éléments consommateurs préalablement associés à la zone d'intégration additionnelle correspondante, les ressources affectées à la partition étant allouées aux éléments consommateurs associés à la partition ,
   c. la modification de la configuration de partitionnement déterminée en fonction des premier et deuxièmes groupes de paramètres additionnels obtenus.
- le procédé comprend, avant l'exploitation du module, la vérification du respect d'un ensemble de règles de partitionnement par la configuration de partitionnement déterminée, la configuration de partitionnement étant considérée valide lorsque l'ensemble des règles de partitionnement est respecté ;
- la vérification comprend le lancement du module avec la configuration de partitionnement, la configuration de partitionnement étant considérée valide lorsque le module démarre avec la configuration de partitionnement, et la configuration de partitionnement étant considérée invalide lorsque le module ne démarre pas avec la configuration de partitionnement ;

La présente description porte aussi sur un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en oeuvre d'un procédé tel que décrit précédemment lorsque le programme d'ordinateur est mis en oeuvre sur l'unité de traitement des données.

La présente description porte également sur un module électronique d'un système avionique, le module ayant des ressources propres à être utilisées par des éléments consommateurs de ressources, le module électronique étant configuré pour mettre en oeuvre un procédé de configuration tel que décrit précédemment.

D'autres caractéristiques et avantages de l'invention apparaîtront à la lecture de la description qui suit de modes de réalisation de l'invention, donnée à titre d'exemple uniquement, et en référence aux dessins qui sont :
- [Fig 1], figure 1, une représentation schématique d'un exemple de système avionique comprenant un module électronique,
- [Fig 2], figure 2, un organigramme d'un procédé de configuration du module électronique de la figure 1, et
- [Fig 3], figure 3, une représentation schématique d'un exemple d'une configuration du module électronique de la figure 1.

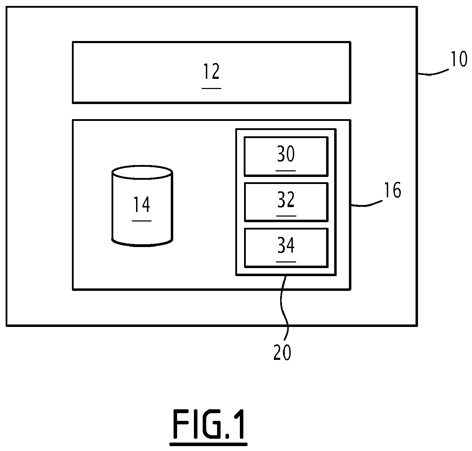

Un système avionique 10 est illustré par la figure 1.

Le système avionique 10 comprend des éléments 12 consommateurs de ressource(s) 14, aussi appelés applications, et au moins un module électronique 16 hébergeant lesdites ressources 14.

A titre d'exemple, les éléments consommateurs 12 sont des fonctions du système avionique 10 dont une partie est installée sur des architectures IMA. Par exemple, les éléments consommateurs 12 sont des programmes informatiques utilisateurs de ressources, des éléments physiques, également appelés éléments matériels (hardware), utilisateurs des ressources, ou encore des tables de configuration décrivant, ou définissant, l'usage des ressources (typique d'une ressource entrée/sortie). Plus particulièrement, les éléments consommateurs 12 sont, par exemple, des programmes de gestion du vol ou de commande du système de freinage du système avionique 10.

Les éléments consommateurs 12 sont susceptibles d'être distants du module 16 hébergeant les ressources 14 considérées (par exemple, lorsque la ressource 14 est un routeur du réseau avionique ou un concentrateur de données).

Chaque élément consommateur 12 présente des contraintes de fonctionnement. Les contraintes de fonctionnement définissent des interactions entre les éléments consommateurs 12. Par exemple, les contraintes de fonctionnement interdisent les interactions entre certains éléments consommateurs 12 et autorisent des interactions entre des éléments consommateurs 12 spécifiques.

De telles contraintes de fonctionnement se traduisent par le regroupement d'éléments consommateurs 12 dans des partitions. Les éléments consommateurs 12 de partitions différentes sont indépendants entre eux. Les éléments consommateurs 12 d'une même partition n'ont pas de contrainte d'indépendance entre eux.

Chaque élément consommateur 12 a un besoin en ressources. Le besoin en ressources d'un élément consommateur 12 est l'ensemble des ressources permettant le fonctionnement de l'élément consommateur 12.

Le module électronique 16 comprend une pluralité de ressources 14 et un organe de configuration 20.

En complément facultatif, le module 16 comprend en outre :
- des entrées et des sorties (par exemple discrètes, analogiques, des bus aéronautiques ARINC 429, 1553 ou encore des bus CAN ou Flew Ray), et/ou
- une connexion à un réseau avionique conforme, par exemple, à la norme ARINC 664, et/ou
- un dispositif d'acquisition permettant d'échantillonner et d'extraire des données, de convertir lesdites données dans un format adéquat et de former à partir desdites données des messages destinés à être émis sur un réseau avionique, un tel dispositif d'acquisition étant généralement configurable pour être adaptable aux divers besoins de systèmes embarqués sur un avion.

A titre d'illustration, le module 16 est, par exemple, l'un des éléments suivants ou une combinaison de plusieurs des éléments suivants :
- un module de calcul comprenant un processeur associé à une mémoire permettant d'exécuter des logiciels applicatifs.
- un module d'acquisition d'entrées/sorties permettant d'échantillonner et de convertir des formats de données, ainsi que d'émettre lesdites données sur un réseau avionique pour des applications locales ou distantes.
- un réseau avionique constitué de routeurs.
- un module d'affichage constitué de processeurs, dont au moins un processeur graphique et, d'un écran.
- un module de stockage de données permettant le partage de données entre plusieurs applications locales ou distantes.

Les ressources 14 du module 16 sont des éléments physiques ou logiques propres à être mis à disposition d'éléments consommateurs 12 de ressources locaux, c'est-à-dire d'éléments appartenant au module 16, ou d'éléments consommateurs 12 de ressources distants, c'est-à-dire d'éléments n'appartenant pas au module 16 et susceptibles d'être positionnés à distance du module 16.

Les ressources 14 sont, par exemple, réparties en catégories de ressources qui sont :
- les ressources de type traitement de données (en anglais « processing »). De telles ressources sont, par exemple, la puissance de calcul d'un processeur ou la capacité de stockage d'une mémoire.
- les ressources de type entrées et sorties (numérique ou analogique).
- les ressources spécifiques au réseau avionique. De telles ressources sont, par exemple, les routeurs de communication d'un réseau ARINC664.
- les ressources de type graphique, c'est-à-dire les ressources permettant un affichage. Un écran est un exemple de telles ressources.
- les ressources de type mémoire de masse (en anglais « mass memory »).

De manière générale, les catégories séparent les ressources selon leur destination.

Les ressources 14 de telles catégories de ressources sont aussi susceptibles d'être distinguées dans les sous-catégories (non exhaustives) suivantes :
- une sous-catégorie pour les différents types de mémoire (RAM, ROM, NVM, ...).
- une sous-catégorie pour les supports de stockage (disques).
- une sous-catégorie pour les processeurs de calcul.
- une sous-catégorie pour les processeurs graphiques.
- une sous-catégorie pour les différents types d'entrée/sorties (discrets, analogiques, bus ARINC 429, 1553, CAN, FlesRay).
- une sous-catégorie pour les points d'accès aux réseaux avionique (ARINC A664).
- une sous-catégorie pour les routeurs de réseau avioniques.
- une sous-catégorie pour les écrans pour l'affichage des informations avioniques.

De manière générale, les sous-catégories séparent les ressources 14 selon leur nature.

Chaque ressource 14 présente au moins une capacité. La capacité de chaque ressource 14 caractérise la taille de ladite ressource 14.

Pour une ressource 14 de type entrée-sortie, la capacité de ladite ressource 14 est quantifiable par le nombre d'entrées et de sorties différentes de ladite ressource 14 (par exemple, le nombre d'entrées discrètes, analogiques, de bus ARINC 429, etc). Par exemple, lorsque la ressource 14 de type entrée sortie est de type bus digital, la capacité est représentée par une bande passante (CAN, ARINC 429).

Pour une ressource 14 de type traitement de données, la capacité de ladite ressource 14 est quantifiable par la puissance de calcul du processeur de ladite ressource 14 et/ou le volume de stockage de la mémoire de ladite ressource 14.

Avantageusement, au moins une ressource 14 présente une capacité modulable. Par le terme « capacité modulable », il est entendu que la capacité de la ressource peut être adaptée en vue de l'usage escompté lors de la configuration du module 16.

Un exemple de ressource 14 ayant une capacité modulable est, par exemple, un bus informatique présentant plusieurs vitesses de fonctionnement. La capacité du bus informatique est la vitesse de transmission des données. Cette capacité est modulable car plusieurs vitesses de transmission sont disponibles.

Un autre exemple de capacité modulable est la ressource temporelle qui peut s'organiser autour d'une période temps réel fixée lors de la configuration du module.

Chaque ressource 14 est découpable en segments de ressource. Chaque segment de ressource présente une capacité unitaire. Chaque segment de ressource est indépendant des autres segments de ressources.

Par exemple, si l'on suppose que la ressource 14 est une mémoire, les segments de ressource sont des fragments de mémoire identifiés, par exemple, par une adresse et une taille.

Dans un premier exemple, l'organe de configuration 20 du module 16 comprend, par exemple, un processeur 30, une mémoire 32 et un lecteur 34 de support d'informations.

Dans ce premier exemple, l'organe de configuration 20 est destiné à interagir avec un produit programme d'ordinateur comportant un support lisible d'informations lisible par le lecteur 34 de l'organe 20.

Le support lisible d'informations du produit programme d'ordinateur est, par exemple, un médium adapté à mémoriser des instructions électroniques et capable d'être couplé à un bus d'un système informatique. A titre d'exemple, le support lisible d'informations est une clé amovible ayant une interface de type USB ou autre, une disquette ou disque souple (de la dénomination anglaise *Floppy disk*), un disque optique, un disque solide (de la dénomination anglaise SSD Solid State Drive), un CD-ROM, un disque magnéto-optique, une mémoire ROM, une mémoire RAM, tout type de mémoire non volatile (par exemple, EPROM, EEPROM, FLASH, NVRAM) une carte magnétique ou une carte optique.

Sur le support lisible d'informations est mémorisé un programme d'ordinateur comprenant des instructions de programme.

Le programme d'ordinateur est chargeable sur le processeur 30 et est adapté pour entraîner la mise en œuvre d'un procédé de configuration du module 16 comme cela sera décrit dans la suite de la description.

En complément facultatif, dans la mesure où l'organe de configuration 20 est un composant du module 16, le processeur 30, la mémoire 32 et le lecteur 34 de support d'informations de l'organe de configuration 20 sont susceptibles d'être partagés avec d'autres composants du module 16.

L'organe de configuration 20 est, avantageusement, embarqué dans le module 16.

Dans un deuxième exemple, l'organe de configuration 20 est de type hardware (traduit en français par *matériel*), tel qu'un circuit logique programmable (abrégé par FPGA ce qui signifie en anglais *Field Programmable Gate Array*), ou encore un circuit intégré dédié, tel qu'un ASIC (de l'anglais *Application-Specific Integrated Circuit).*

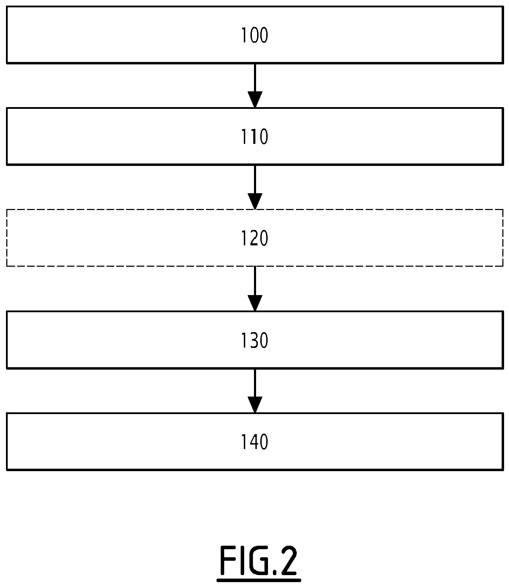

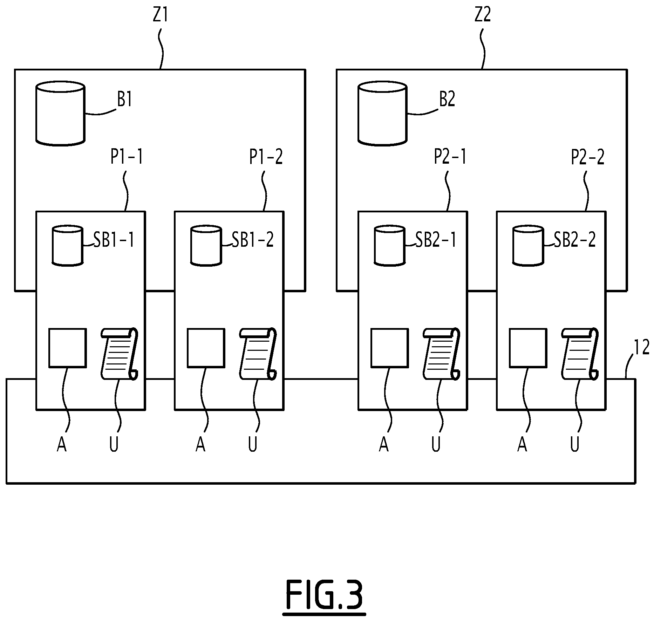

Un procédé de configuration du module 16 va maintenant être décrit en référence à l'organigramme de la figure 2 et à la représentation schématique de la figure 3.

Le procédé de configuration est mis en œuvre par l'organe de configuration 20 du module 16.

Le procédé de configuration est effectué avant la mise en service du module 16 (par exemple lors de la conception du module 16 et des applications intégrées) ou lorsque le module 16 est en test ou en maintenance.

Le procédé de configuration comprend une étape 100 d'obtention d'un ensemble de groupes de paramètres de configuration spécifiques au module 16. Par le terme « spécifiques au module », il est entendu que les groupes de paramètres de configuration ont été obtenus en fonction des ressources 14 spécifiques du module 16, ainsi que des éléments consommateurs 12 destinés à consommer de telles ressources 14. Les paramètres de configurations obtenus seront donc a priori différents pour un autre module présentant des ressources différentes ou sur lequel des éléments consommateurs 12 différents sont à intégrer.

Les groupes de paramètres de configuration sont, par exemple, reçus sous la forme d'un ou plusieurs fichiers informatiques. Chaque groupe de paramètres de configuration comprend au moins un paramètre de configuration.

L'ensemble de paramètres de configuration comprend un premier groupe de paramètres de configuration définissant un premier niveau de segmentation pour l'ensemble des ressources 14 du module 16. Les entités segmentées du premier niveau sont appelées zones d'intégration Z.

Des ressources 14 du module 16 sont affectées à chaque zone d'intégration Z. Une telle affectation de ressources 14 est appelée «budget de ressources B ».

Avantageusement, les ressources 14 affectées à chaque zone d'intégration Z sont spécifiques à la zone d'intégration Z, c'est-à-dire qu'une ressource 14 est affectée à au plus une zone d'intégration Z.

Dans une variante, au moins une ressource 14 est affectée à au moins deux zones d'intégration Z distinctes. Cela est, par exemple, le cas pour les ressources 14 de type entrée-sortie pour lesquelles une entrée pourrait être partagée entre plusieurs zones d'intégration Z. En particulier, les entrées (entrées discrètes, analogiques, bus de données en entrée) sont susceptibles d'être partagées entre plusieurs zones d'intégration Z. Le besoin provient du fait que plusieurs applications, et donc éléments consommateurs 12 peuvent avoir besoin des mêmes données (par exemple deux applications ayant besoin de la donnée d'un même capteur, ou de données transverses fournies par l'avion et communiquées sur un seul bus, ou encore d'informations de position du module obtenues via un « pin programming »).

De tels cas de partage sont prévus lors du design du module, le partage ne peut alors pas introduire d'interférences entre les éléments consommateurs 12 associés aux zones d'intégration Z, et des règles d'usage sont définies pour le garantir. La possibilité de partager une ressource ou non est formellement reportée aux intégrateurs et fournisseurs d'application via le manuel d'utilisation du module. Ainsi, dans cette variante, chaque ressource 14 du module 16 est affectée à au plus une seule zone d'intégration Z, sauf si le partage de ressources est formellement permis.

A titre d'illustration, la configuration de la figure 3 présente deux zones d'intégration Z1 et Z2. A la zone d'intégration Z1, il est affecté le budget de ressources B1 et, à la zone d'intégration Z2, il est affecté le budget de ressources B2.

Chaque zone d'intégration Z est associée à un ensemble d'éléments 12 consommateurs de ressources différents des autres zones d'intégration Z. En d'autre termes, chaque élément consommateur 12 est associé à au plus une zone d'intégration Z.

Le premier groupe de paramètres de configuration est déterminé par une unique entité sur la base de l'ensemble des ressources 14 du module 16 et des besoins en ressources de l'ensemble des éléments consommateurs de ressources. Par le terme « entité », il est entendu une personne physique ou un groupe défini de personnes physiques. Cette ou ces personnes physiques sont aussi appelées « gestionnaire(s) de ressources » ou « intégrateur(s) ». L'entité fournissant le premier groupe de paramètres s'apparente à une « entité maître » ou à un « super intégrateur ».

Le premier groupe de paramètres de configuration est, par exemple, fourni dans un premier fichier informatique. Dans l'exemple de la figure 3, le premier fichier informatique comprend les budgets B1 et B2.

L'ensemble de paramètres de configuration comprend un deuxième groupe de paramètres de configuration pour chaque zone d'intégration Z. Chaque deuxième groupe de paramètres de configuration définit un deuxième niveau de segmentation pour les ressources 14 affectées à la zone d'intégration Z correspondante. Les entités segmentées du deuxième niveau sont des partitions au sens classique en IMA et sont, ainsi, appelées partitions P.

Un sous-ensemble de ressources 14 parmi les ressources 14 préalablement associées à la zone d'intégration Z correspondante est affecté à chaque partition P. Ainsi, des « sous-budgets SB » de ressources sont formés pour chaque partition P.

Avantageusement, les ressources 14 affectées à chaque partition P sont spécifiques à la partition P, c'est-à-dire qu'une ressource 14 est affectée à au plus une partition P.

A titre d'illustration, la configuration de la figure 3 présente deux partitions P1-1 et P1-2 pour la zone d'intégration Z1 et deux partitions P2-1 et P2-2 pour la zone d'intégration Z2. A chaque partition, il est affecté un budget : SB1-1 pour la partition P1-1, SB1-2 pour la partition P1-2, SB2-1 pour la partition P2-1 et SB2-2 pour la partition P2-2.

Dans une variante, au moins une ressource 14 est affectée à au moins deux partitions P distinctes. Cela est, par exemple, le cas pour les ressources 14 de type entrée-sortie pour lesquelles une entrée pourrait être partagée entre plusieurs partitions P. Un exemple de ressources 14 de ce type a été décrit précédemment dans la variante relative aux zones d'intégration Z.

Chaque partition P est associée à un ensemble d'éléments consommateurs 12 parmi les éléments consommateurs 12 préalablement associés à la zone d'intégration Z correspondante. Les éléments consommateurs 12 associés à chaque partition P sont différents des autres zones d'intégration Z.

Les ressources affectées à chaque partition P sont allouées aux éléments consommateurs 12 associés à ladite partition P.

Le deuxième groupe de paramètres de configuration de chaque zone d'intégration Z est déterminé par une entité propre à ladite zone d'intégration Z sur la base des seules ressources 14 affectées à la zone d'intégration Z correspondante et des seuls besoins en ressources des éléments consommateurs 12 associés à ladite zone d'intégration Z.

Avantageusement, le deuxième groupe de paramètres de configuration d'au moins deux zones d'intégration, de préférence de chaque zone d'intégration Z est déterminé par une entité distincte des entités des autres zones d'intégration Z. Ainsi, les deuxièmes groupes de paramètres de configuration de zones d'intégration Z différentes sont propres à être déterminés en parallèle (ie en même temps) ou en série (les uns après les autres).

Avantageusement, chaque deuxième groupe de paramètres de configuration est fourni dans un deuxième fichier informatique distinct des autres deuxièmes groupes de paramètres de configuration.

Le deuxième groupe de paramètres de configuration définit donc une allocation des ressources 14 de la partition P aux éléments consommateurs 12 associés à la partition P. On peut noter que l'allocation se fait au niveau partition et non aux niveau des éléments consommateurs, ceux-ci pouvant librement partager les ressources allouées.

Ainsi, les éléments consommateurs 12 associés à la partition P sont propres à utiliser les ressources 14 qui sont allouées à la partition en fonction d'un usage défini pour la partition P ou pour chaque élément consommateur 12. L'usage des ressources 14 allouées est, par exemple, défini en fonction d'un troisième groupe de paramètres de configuration (aussi appelés paramètres d'utilisation) défini préalablement pour l'ensemble ou chacun des éléments consommateurs 12.

Il est représenté sur la figure 3, pour chaque partition P, un fichier A représentatif des ressources 14 allouées à des éléments consommateurs 12 et un fichier U représentatif des usages des ressources 14 allouées par les éléments consommateurs 12 de la partition P.

Par exemple, lorsque l'une des ressources 14 est un bus de communication, la capacité de ladite ressource 14 est le nombre d'éléments (élément désigne par exemple, un message, ou bien un label d'un bus ARINC A429 ou bien une trame d'un bus CAN) apte à être transmis par unité de temps via le bus de communication. Chaque segment de ressource est un ensemble de messages apte à être transmis par unité de temps. L'allocation est l'allocation d'un nombre de messages apte à être transmis par unité de temps. L'utilisation de la ressource par un élément consommateur 12 est le nombre de messages utilisés par unité de temps par ledit élément consommateur 12, ainsi que les éléments de configuration liés au traitement desdits messages.

Dans un autre exemple, lorsqu'au moins l'une des ressources 14 est une mémoire, la capacité de ladite ressource 14 est la taille de la mémoire. Chaque segment de ressource est une portion de mémoire. L'utilisation de la ressource par un élément consommateur 12 est la portion de mémoire utilisée par l'élément consommateur 12.

Avantageusement, le troisième groupe de paramètres de configuration est déterminé par l'entité propre la partition correspondante ou par une entité propre à chaque élément consommateur 12.

Chaque troisième groupe de paramètres de configuration est fourni dans un troisième fichier informatique. Eventuellement, le deuxième et le troisième fichier de configuration d'une même partition P forment un fichier unique.

Il est à noter que le niveau partition (représenté par les deuxième et troisième groupes de paramètres) permet d'assurer le partitionnement, à condition que les contraintes sur les paramètres soient respectées.

Optionnellement, l'ensemble de paramètres de configuration comprend un quatrième groupe de paramètres de configuration définissant une première configuration de la ou d'au moins une ressource 14 du module 16 ayant une capacité modulable. Ainsi, le quatrième groupe de paramètres de configuration porte potentiellement sur toutes les ressources 14 modulables du module 16 même si celles-ci sont destinées à être affectées à des zones d'intégration Z différentes.

Le quatrième groupe de paramètres de configuration est déterminé par l'entité ayant déterminé le premier groupe de paramètres de configuration.

Chaque quatrième groupe de paramètres de configuration est fourni dans un quatrième fichier informatique. Eventuellement, le premier et le quatrième fichier de configuration forment un fichier unique.

Par exemple, au moins une ressource modulable est un bus informatique présentant plusieurs vitesses de fonctionnement et le quatrième groupe de paramètres de configuration définit la vitesse de fonctionnement du bus.

Un exemple de cette situation est la définition de la base du temps réel qui est unique et concerne tous les éléments consommateurs 12 dans toutes les zones d'intégration Z.

Optionnellement, l'ensemble de paramètres de configuration comprend un cinquième groupe de paramètres de configuration définissant, pour chaque zone d'intégration Z, une deuxième configuration de la ou d'au moins une ressource 14 ayant une capacité modulable affectée préalablement à la zone d'intégration Z.

Avantageusement, le cinquième groupe de paramètres de configuration de chaque zone d'intégration Z est déterminé par l'entité propre à ladite zone d'intégration Z.

Chaque cinquième groupe de paramètres de configuration est fourni dans un cinquième fichier informatique. Eventuellement, le deuxième et le cinquième fichier de configuration d'une même zone d'intégration Z forment un fichier unique.

Par exemple, au moins une ressource 14 modulable affectée à une zone d'intégration Z est un bus informatique présentant plusieurs vitesses de fonctionnement et le cinquième groupe de paramètres de configuration définit la vitesse de fonctionnement du bus pour la zone d'intégration Z.

Un exemple de cette situation est la détermination de la vitesse de bus exclusivement allouée à une zone d'intégration Z, cette vitesse dépendant de l'élément consommateur 12 qui se verra in fine attribuer l'usage de ce bus.

Le procédé de configuration comprend une étape 110 de détermination d'une configuration de partitionnement des ressources 14 du module 16 en fonction de l'ensemble obtenu de groupes de paramètres de configuration. Ainsi, lors de l'étape 110, l'ensemble des paramètres de configuration est considéré pour partitionner les ressources 14 du module 16.

Ainsi, la configuration de partitionnement obtenue correspond, pour chaque ressource 14, à :
- un découpage de la ressource 14 en un ou plusieurs segments de ressource, chaque segment ayant une capacité unitaire,
- une allocation d'au moins un segment de ressource une ou plusieurs partitions P recevant un ou plusieurs éléments consommateurs 12, et
- une utilisation, par chaque élément consommateur 12, d'au moins un segment de ressource alloué.

Optionnellement, le procédé de configuration comprend une étape 120 de vérification, réalisée par le module 16 ou lors de la génération des tables de configuration chargées sur le module 16, avant l'exploitation du module 16, du respect d'un ensemble de règles de partitionnement par la configuration de partitionnement déterminée. La configuration de partitionnement est considérée valide uniquement lorsque le module est démarré. L'ensemble des règles de partitionnement est alors considéré respecté.

Une telle étape de vérification et de validation de la configuration en amont de l'exploitation opérationnelle du module 16 permet d'obtenir un partitionnement intrinsèque. Un tel partitionnement intrinsèque est avantageux car il permet de ne pas ajouter de phase de vérification qualifiée portant sur les paramètres du premier groupe pour le respect du partitionnement lors des phases de définition des zones d'intégration, la garantie de partitionnement reposant sur le module ou la phase de génération des tables de configuration au niveau des partitions.

Avantageusement, les règles de partitionnement comportent au moins les règles suivantes :
- une première règle selon laquelle le résultat d'une opération arithmétique, telle qu'une somme, une somme quadratique, ou l'extraction d'un maximum, sur les capacités unitaires des segments de ressource alloués pour chaque ressource 14 est inférieur ou égal à la capacité de ladite ressource 14,
- une deuxième règle selon laquelle seuls des segments de ressource définis préalablement sont allouables à des éléments consommateurs 12 distincts, et
- une troisième règle selon laquelle l'utilisation de segments de ressource par un élément consommateur 12 est limitée aux segments de ressource alloués audit élément consommateur 12.

Avantageusement, l'étape de vérification 120 comprend le lancement du module 16 avec la configuration de partitionnement. Le lancement du module 16 est équivalent à une phase d'initialisation du module 16. La configuration de partitionnement est considérée valide lorsque le module 16 démarre avec la configuration de partitionnement, et la configuration de partitionnement est considérée invalide lorsque le module 16 ne démarre pas avec la configuration de partitionnement.

Par exemple, pour chaque ressource 14 continue, la capacité est exprimée sous la forme d'un espace alloué défini par un indicateur de début et un indicateur de fin. L'allocation de segments de ressource est exprimée sous la forme de sous-espaces alloués chacun défini par un indicateur de début et un indicateur de fin. Les sous-espaces alloués sont rangés dans une table de configuration par ordre croissant de l'indicateur de début desdits sous-espaces alloués. Dans cet exemple, la configuration de partitionnement est considérée invalide lorsqu'au moins l'une des conditions suivantes est réalisée :
- l'indicateur de début ou l'indicateur de fin d'un sous-espace alloué est compris entre l'indicateur de début et l'indicateur de fin d'un autre sous-espace alloué dans la table de configuration,
- l'indicateur de début ou l'indicateur de fin d'un sous-espace alloué de la table de configuration n'est pas compris au sens large entre l'indicateur de début et l'indicateur de fin de l'espace alloué.

En variante de cet exemple, la capacité est définie seulement sous la forme d'un indicateur de début et d'une taille, ou encore d'un indicateur de début, d'un offset par rapport à ce premier indicateur et d'une taille. La taille est, par exemple, une taille d'une mémoire en octets, une bande passante d'un canal de communication en mégabits par seconde, un nombre d'interfaces d'entrée et de sortie disponibles, une durée ou encore un offset temporel.

Dans un autre exemple, pour des ressources 14 discrètes, les segments de ressource sont listés dans une table de configuration. L'allocation de segments de ressource associe les segments de ressource listés à des éléments consommateurs 12. La configuration de partitionnement est considérée invalide lorsqu'au moins l'une des conditions suivantes est réalisée :
- un segment de ressource listé est associé à plus d'un élément consommateur 12 alors que ledit segment de ressource ne fait pas partie des segments de ressource allouables à des éléments consommateurs 12 distincts, et
- un élément consommateur 12 est associé à un segment de ressource ne figurant pas dans la liste.

Avantageusement, lorsque la configuration de partitionnement est considérée invalide, le procédé comprend la répétition de l'étape de vérification 120 sur des parties, prises individuellement, de la configuration de partitionnement. Une partie d'une configuration de partitionnement est, par exemple, une partie de l'allocation de ladite configuration de partitionnement, c'est-à-dire seuls certains des segments de ressource alloués de la configuration de partitionnement.

Une partie de la configuration de partitionnement est considérée valide lorsque le module 16 démarre avec ladite partie de la configuration de partitionnement. Une partie de la configuration de partitionnement est considérée invalide lorsque le module 16 ne démarre pas avec ladite partie de la configuration de partitionnement.

Dans une variante, le procédé de configuration ne comprend pas l'étape 110 de vérification et des règles de partitionnement sont vérifiées tout au long de l'exploitation du module 16.

Le procédé de configuration comprend une étape 130 d'exploitation du module 16 avec ladite configuration de partitionnement déterminée. Une telle configuration correspond à la configuration considérée valide à l'issue de l'étape de vérification 120 lorsque l'étape de vérification 120 est mise en œuvre.

Optionnellement, le procédé de configuration comprend une étape 140 de modification de la configuration de partitionnement déterminée pour la prise en compte d'éléments consommateurs de ressources additionnels 60. Les éléments consommateurs additionnels 60 sont, par exemple, des applications permettant la mise en œuvre de programme additionnel de contrôle de l'aéronef.

L'étape de modification 140 a, par exemple, lieu lors d'une maintenance ou d'une mise à jour du module 16. Le module 16 n'est alors pas opérationnel dans le système avionique 10 lors de l'étape de modification 140.

L'étape 140 de modification comprend l'obtention d'un premier groupe de paramètres de configuration additionnel définissant une ou des zones d'intégration Z additionnelles. Des ressources 14 du module 16, sont affectées à ou aux zones d'intégration Z additionnelles. Sauf dans des cas où le partage est autorisé (par exemple ressources de type entrée-sortie), les ressources affectées aux zones d'intégration Z additionnelles ne sont pas affectées à des zones d'intégration Z existantes. Chaque zone d'intégration Z additionnelle est associée à un ensemble d'éléments consommateurs de ressources additionnel 60 différents des autres zones d'intégration Z (additionnelles et préexistantes).

Le premier groupe de paramètres de configuration additionnel est avantageusement déterminé par l'entité ayant fourni le premier groupe de paramètres initial. Le premier groupe de paramètres de configuration additionnel est, par exemple, fourni dans un premier fichier informatique additionnel.

L'étape 140 de modification comprend l'obtention d'un deuxième groupe de paramètres de configuration additionnel pour chaque zone d'intégration Z additionnelle. L'obtention des deuxièmes paramètres de configuration additionnels est effectuée de la même manière que l'a été le deuxième groupe existant de paramètres de configuration. Ainsi, chaque deuxième groupe de paramètres de configuration additionnel définit des partitions P pour les ressources 14 affectées à la zone d'intégration Z additionnelle. Chaque partition P est associée à un sous-ensemble d'éléments consommateurs de ressources 60 parmi les éléments consommateurs 60 préalablement associés à la zone d'intégration Z additionnelle correspondante.

Le deuxième groupe de paramètres de configuration additionnel de chaque zone d'intégration Z additionnelle est, par exemple, déterminé par une entité distincte des entités ayant déterminé les deuxièmes groupes de paramètres de configuration initiaux.

Le deuxième groupe de paramètres de configuration est, par exemple, fourni dans un deuxième fichier informatique additionnel.

L'étape 140 de modification comprend l'obtention d'un troisième groupe de paramètres de configuration additionnel pour chaque partition P de chaque zone d'intégration Z additionnelle. Chaque troisième groupe de paramètres de configuration additionnel définit un usage des ressources de la partition P.

Avantageusement, le troisième groupe de paramètres de configuration additionnel de chaque partition P est déterminé par l'entité ayant déterminée le deuxième groupe de paramètres de configuration de la zone d'intégration Z additionnelle correspondante.

Le troisième groupe de paramètres de configuration est, par exemple, fourni dans un troisième fichier informatique additionnel.

Il est à noter qu'une fois les zones d'intégration Z additionnelles définis, les paramètres définissant les partitions P et les usages de ressources 14 desdites partitions P sont obtenus de manière similaire à l'étape d'obtention 100. De même, en fonction des éléments consommateurs additionnels 60, des quatrième et cinquièmes groupes de paramètres additionnels sont aussi susceptibles d'être obtenus lors de l'étape de modification 140 et pris en compte dans la modification de la configuration de partitionnement. Dans ce cas, les quatrième et cinquièmes groupes de paramètres additionnels sont obtenus de manière similaire aux quatrième et cinquièmes groupes de paramètres initiaux.

L'étape 140 de modification comprend la modification de la configuration de partitionnement déterminée en fonction des premier, deuxième(s) et troisième(s) groupes de paramètres additionnels obtenus.

En variante, l'étape de modification comprend l'affectation d'éléments consommateurs additionnels 60 à des zones d'intégration Z existantes par l'entité « maître » et la modification éventuelle, par l'entité ayant déjà procédé à l'intégration initiale, des partitions P correspondantes et des allocations de ressources 14 correspondantes pour intégrer les éléments consommateurs additionnels 60.

Ainsi, le présent procédé permet de faire cohabiter sur un même module des groupes d'applications devant être séparées pour des questions industrielles ou confidentielles. En effet, un tel procédé permet à des entités différentes d'opérer de manière indépendante au niveau de zones d'intégration Z (premier niveau de partitions).

Un tel procédé permet donc d'intégrer sur un module des applications de manière indépendante.

Par exemple, le processus de d'intégration se déroule selon l'un des deux schémas suivants :
- 1^{er} schéma : plusieurs intégrateurs travaillent en parallèle sur la base de zones d'intégration différentes déterminées au préalable et définies à l'aide des premiers groupes de paramètres. L'intégration complète résulte alors du rassemblement des éléments de configuration des différentes zones d'intégration.
- 2^{ème} schéma : un nouvel intégrateur est identifié alors qu'une intégration complète est déjà réalisée. Une nouvelle zone d'intégration peut alors être définie, et une nouvelle phase d'intégration est effectuée en réunissant la nouvelle zone d'intégration à la précédente configuration.

L'homme du métier comprendra que l'invention ne se limite pas aux exemples décrits dans la description et que les modes de réalisation décrits précédemment sont susceptibles d'être combinés lorsqu'une telle combinaison est compatible.

## Revendications

1. Procédé de configuration d'un module électronique (16) d'un système avionique (10), le module (16) ayant des ressources (14) propres à être utilisées par des éléments (12) consommateurs de ressources, le procédé étant mis en œuvre par le module électronique (16) et comprenant les étapes de :
a. obtention d'un ensemble de paramètres de configuration spécifiques au module (16), l'ensemble de paramètres de configuration comprenant au moins les paramètres suivants :
i. un premier groupe de paramètres de configuration définissant un premier niveau de segmentation pour l'ensemble des ressources (14) du module (16), les segmentations du premier niveau étant appelées zones d'intégration (Z), des ressources (14) du module (16) étant affectées à chaque zone d'intégration (Z), chaque zone d'intégration (Z) étant associée à un ensemble d'éléments (12) consommateurs de ressources différents des autres zones d'intégration (Z),
ii. un deuxième groupe de paramètres de configuration pour chaque zone d'intégration (Z), chaque deuxième groupe de paramètres de configuration définissant un deuxième niveau de segmentation pour les ressources (14) affectées à la zone d'intégration (Z) correspondante, les segmentations du deuxième niveau étant appelées partitions (P), un sous-ensemble de ressources (14) parmi les ressources (14) préalablement associées à la zone d'intégration (Z) correspondante étant affecté à chaque partition (P), chaque partition (P) étant associée à un ensemble d'éléments consommateurs (12) parmi les éléments consommateurs (12) préalablement associés à la zone d'intégration (Z) correspondante, les ressources (14) affectées à la partition (P) étant allouées aux éléments consommateurs (12) associés à la partition (P),
b. détermination d'une configuration de partitionnement des ressources (14) du module (16) en fonction des groupes de paramètres de configuration obtenus, et
c. exploitation du module (16) selon la configuration de partitionnement déterminée.

2. Procédé selon la revendication 1, dans lequel chaque élément (12) consommateur de ressources a un besoin en ressources, le premier groupe de paramètres de configuration étant déterminé par une unique entité sur la base de l'ensemble des ressources (14) du module (16) et des besoins en ressources de l'ensemble des éléments (12) consommateurs de ressources.

3. Procédé selon la revendication 1 ou 2, dans lequel chaque élément (12) consommateur de ressources a un besoin en ressources, le deuxième groupe de paramètres de configuration de chaque zone d'intégration (Z) étant déterminé par une entité spécifique à la zone d'intégration sur la base seulement des ressources (14) affectées à la zone d'intégration (Z) correspondante et des besoins en ressources des éléments consommateurs (12) associés à ladite zone d'intégration (Z).

4. Procédé selon l'une quelconque des revendications 1 à 3, dans lequel l'ensemble des paramètres de configuration comprend, en outre, un troisième groupe de paramètres de configuration pour chaque partition (P), chaque troisième groupe de paramètres de configuration définissant l'usage de chaque ressource allouée par le ou les éléments consommateurs (12) associés à la partition (P)

5. Procédé selon l'une quelconque des revendications 1 à 4, dans lequel chaque ressource (14) du module (16) a une capacité, au moins une ressource (14) du module (16) ayant une capacité modulable, l'ensemble des paramètres de configuration comprenant en outre :
a. un quatrième groupe de paramètres de configuration définissant une première configuration de la ou d'au moins une ressource (14) ayant une capacité modulable, et/ou
b. un cinquième groupe de paramètres de configuration pour chaque zone d'intégration (Z), chaque cinquième groupe de paramètres de configuration définissant une deuxième configuration de la ou d'au moins une ressource (14) ayant une capacité modulable affectée au préalable à la zone d'intégration (Z).

6. Procédé selon l'une quelconque des revendications 1 à 5, dans lequel le procédé comprend une étape de modification de la configuration de partitionnement déterminée pour la prise en compte d'éléments consommateurs de ressources additionnels (60), l'étape de modification comprenant :
a. l'obtention d'un premier groupe de paramètres de configuration additionnel définissant une ou des zones d'intégration (Z) additionnelles, des ressources (14) du module (16) étant affectées à ou aux zones d'intégration (Z) additionnelles, chaque zone d'intégration (Z) additionnelle étant associée à un ensemble d'éléments consommateurs de ressources additionnel (60) différents des autres zones d'intégration (Z),
b. l'obtention d'un deuxième groupe de paramètres de configuration additionnel pour chaque zone d'intégration (Z) additionnelle, chaque deuxième groupe de paramètres de configuration additionnel définissant des partitions (P) pour les ressources (14) affectées à la zone d'intégration (Z) additionnelle, un sous-ensemble de ressources (14) parmi les ressources (14) préalablement affectées à la zone d'intégration (Z) additionnelle correspondante étant affecté à chaque partition (P), chaque partition (P) étant associée à un ensemble d'éléments consommateurs (60) parmi les éléments consommateurs (60) préalablement associés à la zone d'intégration (Z) additionnelle correspondante, les ressources (14) affectées à la partition (P) étant allouées aux éléments consommateurs (12) associés à la partition (P), et
c. la modification de la configuration de partitionnement déterminée en fonction des premier et deuxièmes groupes de paramètres additionnels obtenus.

7. Procédé selon l'une quelconque des revendications 1 à 6, dans lequel le procédé comprend, avant l'exploitation du module (16), la vérification du respect d'un ensemble de règles de partitionnement par la configuration de partitionnement déterminée, la configuration de partitionnement étant considérée valide lorsque l'ensemble des règles de partitionnement est respecté.

8. Procédé selon la revendication 7, dans lequel la vérification comprend le lancement du module (16) avec la configuration de partitionnement, la configuration de partitionnement étant considérée valide lorsque le module (16) démarre avec la configuration de partitionnement, et la configuration de partitionnement étant considérée invalide lorsque le module (16) ne démarre pas avec la configuration de partitionnement.

9. Produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'un procédé selon l'une quelconque des revendications 1 à 8 lorsque le programme d'ordinateur est mis en œuvre sur l'unité de traitement des données.

10. Module électronique (16) d'un système avionique (10), le module (16) ayant des ressources (14) propres à être utilisées par des éléments (12) consommateurs de ressources, le module électronique (16) étant configuré pour mettre en œuvre un procédé de configuration selon l'une quelconque des revendications 1 à 8.
